# EUROPÄISCHE PATENTSCHRIFT

(11) **EP 4 199 018 B1**
(45) Veröffentlichungstag und Bekanntmachung des Hinweises auf die Patenterteilung: **21.02.2024**
(21) Anmeldenummer: 21214486.9
(22) Anmeldetag: 14.12.2021
(51) Int. Cl.: H01G 9/10, H01G 2/10, C03C 1/00, H01B 7/02, C03C 27/00, C03C 3/155, H01R 13/405, H01R 13/52, C03C 8/24, H01G 4/35, H01R 24/28, H01R 24/30, H01B 7/00

(54) **VERBINDUNG, ELEKTRISCHE DURCHFÜHRUNG, UND SENSOR**
CONNECTION, ELECTRICAL FEEDTHROUGH, AND SENSOR
CONNEXION, TRAVERSÉE ÉLECTRIQUE ET CAPTEUR

(30) Priorität: 08.01.2021 EP 21150799
(43) Veröffentlichungstag der Anmeldung: 21.06.2023
(73) Patentinhaber: Kistler Holding AG, 8408 Winterthur (CH)
(72) Erfinder: Mastrogiacomo, Giovanni, 8005 Zürich (CH); Märki, Hans Beat, 8483 Kollbrunn (CH); Cadonau, Thomas, 9533 Kirchberg (CH)

(56) Entgegenhaltungen:
- EP-A1- 0 978 888
- EP-A2- 1 688 160
- CN-B- 105 481 253
- CN-B- 108 511 641
- DE-A1-102014 016 600
- JP-A- 2016 216 300
- US-A- 3 638 076

## Beschreibung

### Technisches Gebiet

Die Erfindung betrifft eine Verbindung, wobei die Verbindung ein Legierungselement mit einem Keramikelement mittels eines Glasverbindungsmittels verbindet gemäss der Definition des Oberbegriffs des unabhängigen Anspruchs. Die Erfindung betrifft auch eine elektrische Durchführung, welche eine vorgenannte Verbindung umfasst. Die Erfindung betrifft auch einen Sensor umfassend mindestens eine solche elektrische Durchführung.

### Stand der Technik

Temperaturbeständige stoffschlüssige Verbindungen zwischen verschiedenen Materialien werden in einer Vielzahl industrieller Produkte benötigt. Dabei werden üblicherweise zwei zu verbindende Elemente mittels eines Verbindungsmittels stoffschlüssig verbunden. Die temperaturbeständige stoffschlüssige Verbindung zwischen einem Keramikelement und einem Legierungselement aus einer Metalllegierung, kurz Legierung, oder einem Metall stellt oft auf Grund unterschiedlicher Wärmeausdehnungskoeffizienten eine Herausforderung dar oder schränkt die Materialauswahl stark ein. Eine Legierung ist in der Metallurgie ein Werkstoff, welcher mindestens zwei chemische Elemente aufweist, von denen mindestens eins ein Metall ist und die gemeinsam das Merkmal der Metallbindung aufweisen. Im Folgenden wird der besseren Verständlichkeit halber der Begriff Metalllegierung oder kurz Legierung stellvertretend für ein Reinmetall oder eine metallische Legierung oder einen anderen metallischen Werkstoff verstanden. Wird die Verbindung unter hohen Temperaturen der zu verbindenden Elemente hergestellt, beispielsweise durch Löten mit einem Metalllot als Verbindungsmittel bei der Schmelztemperatur des Lotes, so wirken bei anderen Temperaturen als der Schmelztemperatur des Lotes starke Kräfte auf die Verbindung. Diese Kräfte werden auch als mechanische Spannung bezeichnet. Bei einer Temperaturänderung ändern sich die Kräfte, wodurch es bei Temperaturänderungen zu einer Schwächung der Verbindung kommt, was zu Rissbildung führen kann oder die Eigenschaften der Verbindung anderweitig negativ beeinflusst.

Temperaturbeständige stoffschlüssige Verbindungen sind oft in Sensoren zu finden, beispielsweise in elektrischen Durchführungen, deren Gehäuse mit dem Sensorgehäuse oder Gerätegehäuse verschweisst sind. Ein metallischer Leiter durchsetzt üblicherweise direkt ein isolierendes Glasverbindungsmittel aus einem Glas. Das Glasverbindungsmittel ist radial von einem Gehäuse umgeben. Ein hohlzylinderförmiges Glasverbindungsmittel wird häufig verwendet, um eine Verbindung zwischen dem Gehäuse als ein zu verbindendes Element und dem Leiter als weiteres zu verbindendes Element zu erhalten. Ein bekanntes Glasverbindungsmittel in kommerziell erhältlichen Durchführungen ist Borosilikatglas. Das Borosilikatglas wird bei der Herstellung der Durchführung bei hohen Temperaturen über 800°C geschmolzen und stellt eine stoffschlüssige Verbindung mit den zu verbindenden Elementen her. Dies ist in der Fachwelt auch als "verglasen" bekannt.

Insbesondere auf Grund des Trends der zunehmenden Miniaturisierung sind typische Sensorgehäuse möglichst dünnwandig und klein. Daher müssen die eingesetzten Materialien sich durch ein feinkörniges Gefüge charakterisieren, wobei unter einem feinkörnigen Gefüge ein Material verstanden wird, welches kristalline Zonen, auch Körner genannt, aufweist, welche Körner eine kleine mittlere Korngrösse unterhalb 0.01 mm aufweisen. Die mittlere Korngrösse ist dabei mittels der Methode aus ASTM International Standard Test Method E112-10, DOI: 10.1520/E0112-10, bestimmt.

Insbesondere bei Kraft- und Drucksensoren sind oft dünne metallische Membranen vorhanden. Auch sind in solchen Sensoren oft dünnwandige metallische Vorspannhülsen vorhanden, welche ein Messelement mechanisch mit einer möglichst dünnwandigen Vorspannhülse mit einer Vorspannkraft vorspannen. Vorspannhülsen werden dabei oft mit einem metallischen Sensorgehäuse verschweisst. Für eine gute Schweissverbindung wird das Sensorgehäuse oft aus demselben Material hergestellt wie die Vorspannhülse, selbst wenn das Gehäuse selbst keine dünnen oder filigranen Elemente oder Strukturen aufweist. Es sind auch Sensoren mit dünnwandigen Membranen bekannt. Ebenso wie die Vorspannhülsen sind diese oft mit dem Sensorgehäuse verschweisst, um eine hermetisch dichte Verbindung zum Schutz des Innenraums des Sensors vor Umwelteinflüssen zu erzielen, beispielsweise aus US4016437A. Demzufolge werden solche Sensorgehäuse zum Beispiel aus martensitischen Stählen, wie zum Beispiel Stähle mit EN Werkstoffnummern 1.4542, 1.4534 oder 1.4614 gefertigt. Bekannte elektrische Durchführungen weisen jedoch oft ein Gehäuse der Stahlgüte 1.3981 auf, welche ein austenitisches und dadurch grobkörniges Gefüge hat. Als grobkörnig im Sinne dieses Dokuments wird eine mittlere Korngrösse grösser 0.01 mm verstanden. Stahl mit EN Werkstoffnummern 1.3981 hat einen ähnlichen Wärmeausdehnungskoeffizienten wie Aluminiumoxid und Borosilikatgläser. Jedoch charakterisieren sich die martensitischen Stähle durch einen deutlich grösseren Wärmeausdehnungskoeffizient von 9 bis 12·10⁻⁶·K⁻¹. Diese Inkompatibilität zwischen den martensitischen Stählen und dem Stahl mit EN Werkstoffnummern 1.3981 hat zur Folge, dass eine Verbindungszone zwischen den Stählen eine kleinere Dehngrenze als die martensitische Stähle aufweist und eine Lötverbindung oder eine Schweissverbindung oder sonstige stoffschlüssige Verbindung auf Grund der unterschiedlichen Wärmeausdehnungskoeffizienten der zu verbindenden Elemente zu Rissen neigt.

Damit das in einer stoffschlüssigen Verbindung eingesetzte Glasverbindungsmittel nicht zu stark fliesst und nicht Bereiche der zu verbindenden Elemente kontaminiert, welche von der stoffschlüssigen Verbindung räumlich beabstandet sind, muss die die sogenannte Verglasungstemperatur nur knapp oberhalb der Schmelztemperatur des Glasverbindungsmittels liegen. Eine Kontamination hätte zur Folge, dass diese Bereiche beispielsweise nicht mehr für weitere Lötverbindungen oder Schweissverbindungen nutzbar sind. Die Verglasungstemperatur nahe der Schmelztemperatur des Glasverbindungsmittels verhindert ein unnötiges Fliessen des Verbindungsmittels. Um trotz einer Verarbeitungstemperatur nahe des Schmelzpunktes des Glasverbindungsmittels porenfreie und/oder lunkerfreie stoffschlüssige Verbindungen, sogenannte porenfreie und/oder lunkerfreie Verglasungen, zu erhalten, muss das Glasverbindungsmittel in einem engen Toleranzband gefertigt werden, sodass der Kontakt zwischen zu verbindendem Element und Glasverbindungsmittel bereits vor der Verglasung gegeben ist. Als Lunker sind in der Metallurgie Hohlräume in einem Volumen bezeichnet, welche auf Grund der Abkühlung und Erstarrung einer Schmelze auftreten. Das Glasverbindungsmittel muss eine hohe Form- und Lagetoleranz aufweisen. Die Form- und Lagetoleranz ist jedoch schwierig und nur unter hohem Aufwand zu realisieren.

Aus US3638076A ist eine stoffschlüssige Verbindung zwischen Elementen aus dem Metall Tantal und Keramik bekannt, wobei die Verbindung durch ein Verbindungsmittel aus Glas ausgeführt ist. Tantal, Keramik und Glas sind so gewählt, dass ihre Wärmeausdehnungskoeffizienten sich nicht mehr als 1.5·10⁻⁶ K⁻¹ unterscheiden. Tantal ist für viele Anwendungen ungeeignet wegen seiner hohen Schmelztemperatur oberhalb 3000°C. Zudem neigt es sehr zu oxidieren, was eine inerte Umgebung beim Schweissen voraussetzt. Zudem ist es teuer. Zudem weist das Glasmaterial der US3638076A einen hohen Schmelzpunkt von über 900°C auf. Solch hohe Temperaturen können jedoch insbesondere dünne Metallelemente beschädigen, beispielsweise irreversibel verformen.

Temperaturbeständige stoffschlüssige Verbindungen zwischen verschiedenen Materialien werden auch in der elektrischen Isolation von Metalloberflächen durch eine Keramik verwendet. Eine Metalloberfläche ist dabei stoffschlüssig mit einer flächigen Keramik verbunden.

Die Dokumente CN 108 511 641 B und EP 1 688 160 A2 beschreiben elektrische Durchführungen. Das Dokument CN 105 481 253 B beschreibt Glasverbindungsmittel.

Aufgabe der Erfindung ist es, eine Verbindung zwischen einem Metallmaterial und einer Keramik zu erreichen, die temperaturbeständig ist, die kostengünstig ausführbar ist und die bei niedrigen Temperaturen unterhalb 800°C fertigbar ist. Eine weitere Aufgabe der Erfindung ist es, eine elektrische Durchführung zu erstellen, welche temperaturbeständig und kostengünstig zu fertigen ist.

### Darstellung der Erfindung

Die Aufgabe wird durch die Merkmale der unabhängigen Ansprüche gelöst.

Die Erfindung betrifft eine Verbindung nach dem unabhängigen Anspruch 1.

Die Erfindung betrifft auch eine elektrische Durchführung nach dem unabhängigen Anspruch 10.

Unter einer Prozentangabe eines Anteils eines Stoffes, Beispielsweise Bismut, an einem Stoffgemisch, beispielsweise ein Glas, wird eine prozentuale Gewichtsangabe des Anteils des Stoffes zum Gesamtgewicht des Stoffgemisches verstanden.

Unter einem Glas wird hier wie auch üblicherweise ein Material verstanden, dass eine Glasübergangstemperatur aufweist, bei der ein festes Glas in einen gummiartigen bis zähflüssigen Zustand übergeht. Zähflüssig wird dabei allgemein meist bei einer Viskosität von etwa 10¹² Pa·s (Pascal Sekunden) definiert. Ein Glasübergang ist nicht mit einer exakten Temperatur verknüpft, sondern ein Temperaturbereich. Die Glasübergangstemperatur wird auch als Glastemperatur oder Transformationstemperatur bezeichnet.

Ein Glas weist zudem eine Verglasungstemperatur auf, bei der stoffschlüssige Verbindungen gebildet werden. Diese Verglasungstemperatur wird im folgenden auch Schmelztemperatur genannt. Ein Verglasen wird auch als ein Schmelzen bezeichnet.

Das Legierungselement weist einen Wärmeausdehnungskoeffizienten von mindestens 9·10⁻⁶ K⁻¹ auf und das Glasverbindungsmittel mit einem Anteil Bismut weist einen Wärmeausdehnungskoeffizienten von mindestens 9·10⁻⁶ K⁻¹auf. Alle Angaben zu Wärmeausdehnungskoeffizienten beziehen sich auf den Wärmeausdehnungskoeffizienten zwischen Raumtemperatur von 25°C und 100°C, soweit nicht anders angegeben. Eine Legierung ist insbesondere auch ein martensitischer Stahl. Eine Verbindung von Legierungselement und Glasverbindungsmittel ist daher bezüglich der Wärmeausdehnungskoeffizienten unproblematisch. Das Keramikelement weist einen Wärmeausdehnungskoeffizienten von maximal 8·10⁻⁶ K⁻¹ auf. Daher überschneiden sich die Bereiche der Wärmeausdehnungskoeffizienten des Legierungselements und des Keramikelements nicht. Die stoffschlüssige Verbindung des Legierungselements mit dem Glasverbindungsmittel und des Keramikelements mit dem Glasverbindungsmittel kommt durch ein zumindest teilweises Schmelzen des Glasverbindungsmittels zustanden. Das geschmolzene Glasverbindungsmittel wird jeweils in Kontakt mit dem Legierungselement und dem Keramikelement gebracht. Es werden mindestens Bismut-haltige Anteile des Glasverbindungsmittels in das Keramikelement eingebracht. Der Teilbereich des Keramikelements, in welchem ein höherer Anteil Bismut in dem Keramikelement nachweisbar als in selbigen Keramikelement bevor es stoffschlüssig mit dem Glasverbindungsmittel verbunden ist, wird als Mischbereich bezeichnet. Innerhalb des Mischbereichs passt sich der Wärmeausdehnungskoeffizient an den Wärmeausdehnungskoeffizienten des Glasverbindungsmittels an. Bei Temperaturänderung auftretende Kräfte sind durch die Anpassung des Wärmeausdehnungskoeffizienten des Mischbereichs an den Wärmeausdehnungskoeffizienten des Glasverbindungsmittels an der Grenze zwischen Mischbereich und Glasverbindungsmittel geringer als ohne die Anpassung des Wärmeausdehnungskoeffizienten durch Einbringen des Anteils Bismut in das Keramikelement. Dies ist vorteilhaft, da an der Grenze zwischen Keramikelement und Glasverbindungsmittel somit eine Kraft wirkt die geringer ist als eine Kraft, die wirken würde, wenn kein Mischbereich im Keramikelement vorhanden wäre. Dies vermindert die Möglichkeit einer Beschädigung der stoffschlüssigen Verbindung. Die stoffschlüssige Verbindung zwischen Glasverbindungsmittel und Keramikelement ist temperaturbeständig bis nahe der Glasübergangstemperatur des Glasverbindungsmittels.

An der stoffschlüssigen Verbindung zwischen dem Legierungselement und dem Glasverbindungsmittel treten auf Grund der guten Übereinstimmung der Wärmeausdehnungskoeffizienten des Legierungselements und des Glasverbindungsmittels keine oder nur geringe Kräfte bei Temperaturänderung auf. Daher ist auch die die stoffschlüssige Verbindung zwischen Glasverbindungsmittel und Legierungselement temperaturbeständig bis nahe der Verglasungstemperatur des Glasverbindungsmittels.

Eine Rissbildung, wie sie bei einer Verbindung von Materialien mit unterschiedlichen Wärmeausdehnungskoeffizienten bei Temperaturwechseln vorkommt, wird mit einer erfindungsgemässen Verbindung zwischen Legierungselement und Keramikelement mittels dem Glasverbindungsmittel vermieden.

Eine Temperaturänderung ist dabei eine Änderung der Temperatur des Glasverbindungsmittels oder des Legierungselementes oder des Keramikelementes oder eine Änderung der Temperatur einer Kombination aus Glasverbindungsmittel, Keramikelement, Legierungselement über einen Zeitraum von Sekunden bis Tagen um mindestens 10°C. Ein Temperaturwechsel ist eine wiederholte Temperaturänderung zwischen mindestens zwei Temperaturen.

Die Erfindung betrifft des Weiteren eine elektrische Durchführung nach Anspruch 9, welche mindestens eine in den vorangehenden Abschnitten beschriebene Verbindung umfasst.

### Kurze Beschreibung der Zeichnungen

Im Folgenden wird die Erfindung beispielhaft unter Beizug der Figuren näher erklärt. Es zeigen
- Fig. 1: eine schematische Teilansicht einer Ausführungsform einer Verbindung,
- Fig. 2: eine schematische Teilansicht einer weiteren Ausführungsform einer Verbindung,
- Fig. 3: eine schematische Teilansicht einer weiteren Ausführungsform einer Verbindung,
- Fig. 4: eine schematische Teilansicht einer Ausführungsform einer elektrischen Durchführung,
- Fig. 5: eine schematische Teilansicht einer weiteren Ausführungsform einer elektrischen Durchführung,
- Fig. 6: eine schematische Teilansicht einer weiteren Ausführungsform einer elektrischen Durchführung,
- Fig. 7: eine schematische Teilansicht einer weiteren Ausführungsform einer elektrischen Durchführung,
- Fig. 8: eine Darstellung einer Teilansicht einer Ausführungsform einer elektrischen Durchführung,
- Fig. 9: eine schematische Teilansicht einer weiteren Ausführungsform einer elektrischen Durchführung,
- Fig. 10: eine schematische Teilansicht einer weiteren Ausführungsform einer elektrischen Durchführung,
- Fig. 11: eine schematische Teilansicht eines Sensorgehäuses umfassend eine elektrischen Durchführung,
- Fig. 12: eine schematische Teilansicht eines Sensors.

### Wege zur Ausführung der Erfindung

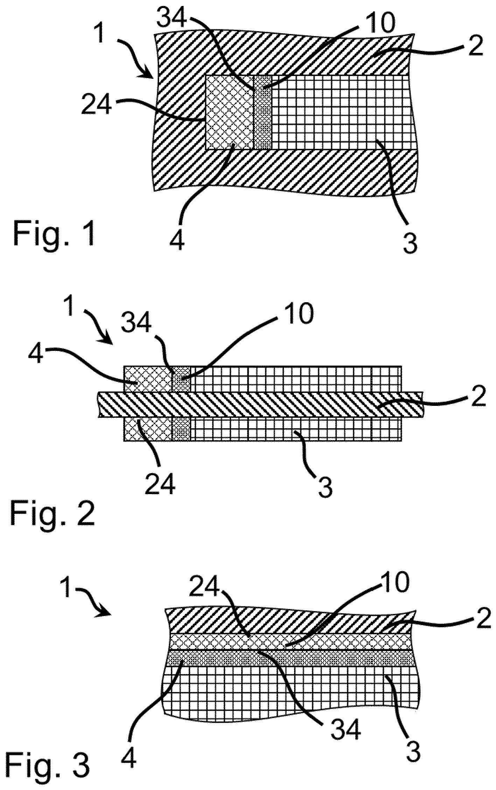

Fig. 1 zeigt eine schematische Teilansicht einer möglichen Ausführungsform einer Verbindung 1.

Eine Verbindung 1 ist die Verbindung eines Legierungselements 2 mit einem Keramikelement 3 mittels eines Glasverbindungsmittels 4. Das Glasverbindungsmittel 4 ist mit dem Legierungselement 2 mit einer stoffschlüssigen Verbindung 24 verbunden. Des Weiteren ist das Glasverbindungsmittel 4 mit stoffschlüssiger Verbindung 34 mit dem Keramikelement 3 verbunden. Das Glasverbindungsmittel 4 weist einen Schmelzpunkt unter 800°C auf. Die jeweilige stoffschlüssigen Verbindungen 24, 34 mit dem Keramikelement 3 und dem Legierungselement 2 werden jeweils bei einer Temperatur knapp oberhalb der Schmelztemperatur des Glasverbindungmittels 2 ausgeführt. Unter niedrigen Temperaturen werden im Folgenden Temperaturen unterhalb 800°C verstanden, während unter hohen Temperaturen im Folgenden Temperaturen oberhalb 800°C verstanden werden. Die niedrige Schmelztemperatur des Glasverbindungsmittels 4 wird durch einen Anteil Bismut von mindestens 10% erreicht, welchen das Glasverbindungsmittel 4 aufweist.

Die niedrige Schmelztemperatur des Glasverbindungsmittels 4 verringert eine mechanische Beanspruchung des Keramikelements 3 und des Legierungselements 2 durch Längenausdehnung, wie sie bei stoffschlüssigen Verbindungen mit beispielsweise Borosilikatgläsern mit hohen Schmelztemperaturen vorkommen. Niedrigen Temperaturen zur Herstellung einer Verbindung 1 sind zudem vorteilhaft, da eine Längenausdehnung des beteiligten Keramikelements 3 und des beteiligten Legierungselements 2 und Glasverbindungsmittel 4 auf Grund verschiedener Wärmeausdehnungskoeffizienten temperaturabhängig ist. Daher ist eine Längenausdehnung und damit auch eine Längenausdehnungsdifferenz zwischen Glasverbindungsmittel 4 und Keramikelement 3 oder Legierungselement 2 geringer, als wenn eine hohe Temperatur zur Erstellung der Verbindung 1 verwendet würde. Werden in der Verbindung 1 die mittels Glasverbindungsmittel 4 verbundene Keramikelement 3 und Legierungselement 2 nach stoffschlüssiger Verbindung 24, 34 mit dem Glasverbindungsmittel 4 bei anderen Temperaturen eingesetzt, beispielsweise Raumtemperatur oder Temperaturen im negativen Bereich der Celsiusskala, so ist auch der relative Unterschied in der Längenausdehnung von Keramikelement 3 und Legierungselement 2 mit unterschiedlichen Wärmeausdehnungskoeffizienten bezüglich der vorgenannten hohen Temperatur geringer als bei stoffschlüssigen Verbindungen, welche bei hohen Temperaturen hergestellt werden müssen.

Erfindungsgemäss weist die Verbindung 1 einen Mischbereich 10 auf. Der Mischbereich 10 weist einen Anteil Bismut auf. Der Mischbereich 10 ist ein Teilbereich des Keramikelements 3.

Das Keramikelement 3 weist dabei zeitlich vor der stoffschlüssigen Verbindung 34 mit dem Glasverbindungsmittel 4 einen geringeren Anteil Bismut auf als der Anteil Bismut im Mischbereich 10. Der Anteil Bismut im Keramikelement 3 zeitlich vor der stoffschlüssigen Verbindung 34 kann auch Null oder so gering sein, dass er nicht nachweisbar ist. Ein Nachweis von Bismut ist beispielsweise über allgemeine bekannte Röntgenfluoreszensmessungen oder Röntgenabsorptionsmessungen möglich. Aber auch bekannte Materialanalyseverfahren wie Sekundärionen-Massenspektrometrie (SIMS) können zum Nachweis von Bismut eingesetzt werden.

Der Mischbereich 10 weist einen höheren Anteil Bismut als das Keramikelement 3 ausserhalb des Mischbereichs 10.

Der Mischbereich 10 ist räumlich anschliessend an das Glasverbindungsmittel 4 angeordnet. In den Figuren 1 bis 3 sind drei Ausführungsformen einer Verbindung 1 dargestellt.

Das Legierungselement 2 weist einen Wärmeausdehnungskoeffizienten von mindestens 9·10⁻⁶ K⁻¹ auf und das Glasverbindungsmittel 4 mit einem Anteil Bismut weist einen Wärmeausdehnungskoeffizienten von mindestens 9·10⁻⁶ K⁻¹ auf. Eine stoffschlüssige Verbindung 24 von Legierungselement 2 und Glasverbindungsmittel 4 ist daher bezüglich der Wärmeausdehnungskoeffizienten möglich.

Das Keramikelement 3 weist einen Wärmeausdehnungskoeffizienten von maximal 8·10^{~6} K⁻¹ auf. Der Wärmeausdehnungskoeffizient des Keramikelements 3 ist durch die Einbringung des Anteils Bismut in einen Teilbereich des Keramikelements, welcher Mischbereich 10 genannt ist, erhöht. So ist im Mischbereich 10 mit erhöhtem Anteil Bismut der Wärmeausdehungskoeffizient höher als im Keramikelement 3 ausserhalb des Mischbereichs 10 ohne einen erhöhten Anteil Bismut. Durch das Einbringen von Bismut in den Mischbereich 10 des Keramikelements 3 ist der Wärmeausdehungskoeffizient des Mischbereichs 10 näher dem Wärmeausdehungskoeffizient des Glasverbindungsmittels 4 und dem Wärmeausdehungskoeffizient des Legierungselements 2. Mechanische Spannungen an der Grenze zwischen Keramikelement 3 und Glasverbindungsmittel 4 sind durch den Mischbereich 10 reduziert im Vergleich zu einer Verbindung 1 ohne Mischbereich 10, da ein Teil der Verspannung nun innerhalb des Mischbereichs 10 und damit innerhalb eines Teilbereiches des Keramikelements 3 auftritt. Dort ist die mechanische Spannung es jedoch ohne negative Folgen für die stoffschlüssige Verbindung 34 von Keramikelement 3 und Glasverbindungsmittel 4.

Der Mischbereich 10 weist in einer Ausführungsform einen graduell zum Glasverbindungsmittel 4 hin zunehmenden Anteil Bismut auf. Es hat sich gezeigt, dass der Wärmeausdehnungskoeffizient des Keramikelements vom Anteil Bismut abhängt. Im Mischbereich 10 steigt der Wärmeausdehnungskoeffizient mit steigendem Anteil Bismut an. Dadurch nähert sich im Mischbereich 10 mit räumlicher Nähe zum Glasverbindungsmittel 4 auch der Wärmeausdehnungskoeffizient dem des Glasverbindungsmittels 4 an. Bei einer graduellen Annäherung des Wärmeausdehnungskoeffizienten im Mischbereich 10 verteilen sich bei Temperaturänderung der stoffschlüssigen Verbindung 34 auftretende mechanische Spannungen und damit einhergehende Kräfte über den gesamten Mischbereich 10. An der Grenze zwischen Keramikelement 3 und Glasverbindungsmittel 4 wirkt eine geringere Kraft als eine Kraft, die zwischen Legierungselement 2 und Keramikelement 3 wirken würde, wenn kein Mischbereich im Keramikelement 3 vorhanden wäre.

Für eine graduelle Anpassung des Wärmeausdehungskoeffizienten im Mischbereich 10 an den Wärmeausdehungskoeffizienten im Glasverbindungsmittel 4 ist es vorteilhaft, dass der Anteil an Bismut an der Grenze vom Glasverbindungsmittel 4 zum Mischbereich 10 sprunghaft abnimmt. Die Grenze vom Glasverbindungsmittel 4 zum Mischbereich 10 ist dabei durch das Vorhandensein von Keramikmaterial im Mischbereich 10 und dem Fehlen desselben im Glasverbindungsmittel 4 gegeben. Da die Abhängigkeit des Wärmeausdehnungskoeffizient im Mischbereich 10 vom Anteil Bismut von der Abhängigkeit des Wärmeausdehnungskoeffizient des Glasverbindungsmittels 4 vom Anteil Bismut unterschiedlich ist, muss der Anteil Bismut im Mischbereich 10 tiefer sein als Anteil Bismut im Glasverbindungsmittel 4 um eine Anpassung der Wärmeausdehnungskoeffizienten an der Grenze zwischen Mischbereich 10 und Glasverbindungsmittel 4 zu erhalten. Daher ist vorteilhaft der Anteil Bismut im Mischbereich 10 derart gestaltet, dass der Anteil an Bismut an der Grenze vom Glasverbindungsmittel 4 zum Mischbereich 10 sprunghaft abnimmt. Eine sprunghafte Änderung eines Anteils ist eine relative Änderung des Anteils von mehr als 5% innerhalb einer Strecke von 0.001 mm.

Der Mischbereich 10 weist vorteilhafterweise eine räumliche Ausdehnung von mindestens 0.001 mm vom Verbindungsmittel 4 auf. Die Begrenzung der räumlichen Ausdehnung des Mischbereichs 10 ist dabei einerseits die räumliche Ausdehnung des Keramikelements 3. Diese räumliche Ausdehnung des Keramikelements 3 begrenzt den Mischbereich daher auch gegen das direkt anschliessende Glasverbindungsmittel 4. Die Ausdehnung des Mischbereichs 10 ist senkrecht von der Grenze zum Glasverbindungsmittel 4 im Keramikelement 3 gemessen. Eine weitere Begrenzung des Mischbereichs 10 ist dort definiert, wo der Anteil von Bismut im Keramikelement 3 geringer oder gleich 1/e des Anteils von Bismut im Keramikelement 3 direkt anschliessend an das Glasverbindungsmittel 4 beträgt. Der Wert 1/e ist der Kehrwert der Eulerschen Zahl. Der Anteil an Bismut im Keramikelement 3 direkt anschliessend an das Glasverbindungsmittel 4 ist der Anteil Bismut innerhalb der ersten 0.0005°mm des Keramikelements 3 an der Grenze vom Glasverbindungsmittel 4 zum Keramikelement 3. Der Mischbereich 10 ist also ein Teilbereich des Keramikelements 3. Die Räumliche Ausdehnung des Mischbereichs 10 von mindestens 0.001 mm ist vorteilhaft, da sich bei Temperaturänderung der stoffschlüssigen Verbindung 34 auftretende Kräfte über den gesamten Mischbereich 10 verteilen. Die Räumliche Ausdehnung des Mischbereichs 10 kann über die Verglasungstemperatur und die Dauer der Verglasung eingestellt werden. Eine grössere Ausdehnung als etwa 1.0 mm ist nicht notwendig, da es zu keiner wesentlichen Verbesserung der Haltbarkeit der Verbindung 1 führt und der Energieaufwand für das Verglasen und die Dauer der Verglasung unnötig erhöht ist.

In einer Ausführungsform ist das Glasverbindungsmittel 4 frei von Blei. Bleihaltige Lotgläser und Ihre Eigenschaften sind allgemein bekannt. Blei hat jedoch allgemein bekannte schädliche Wirkung auf biologische Organismen. Daher ist der Einsatz von Blei in elektrischen und elektronischen Bauteilen zum Teil verboten, beispielsweise durch die Richtlinie 2011/65/EU des Europäischen Parlaments und des Rates vom 8. Juni 2011 zur Beschränkung der Verwendung bestimmter gefährlicher Stoffe in Elektro- und Elektronikgeräten) (RoHS). Jedoch ist es möglich, ein erfindungsgemässes Glasverbindungsmittel 4 ohne einen Anteil Blei zu erstellen. Dies hat den Vorteil, dass das Glasverbindungsmittel 4 der Richtlinie 2011/65/EU entspricht. Unter der Angabe frei von Blei wird in Anlehnung an Richtlinie 2011/65/EU auch ein Anteil Blei unterhalb 0.1 Gewichtsprozent verstanden.

Das Glasverbindungsmittel 4 ist aus einem Glas mit einer Schmelztemperatur unterhalb 800°C ausgeführt. Zur Ausführung einer stoffschlüssigen Verbindung 34 zwischen Glasverbindungsmittel 4 und Keramikelement 3 oder einer stoffschlüssigen Verbindung 24 zwischen Glasverbindungsmittel 4 und Legierungselement 2 weist das Glasverbindungsmittel 4 zumindest teilweise und das jeweilige Legierungselement 2 oder Keramikelement 3 zumindest teilweise für mindestens einige Millisekunden die Schmelztemperatur des Glasverbindungsmittels 4 auf. Gegenüber üblichen stoffschlüssigen Verbindungen mit Verbindungsmitteln aus Borosilikatgläsern mit hohen Schmelztemperaturen hat eine niedrige Schmelztemperatur des Glasverbindungsmittels 4 mit Anteil Bismut den Vorteil, dass die Längenausdehnung des Glasverbindungsmittels 4 und des Legierungselementes 2 respektive des Keramikelements 3 bezüglich Raumtemperatur geringer ist als bei hohen Temperaturen. Dadurch sind potenzielle mechanische Spannungen bei Temperaturen unterhalb der Schmelztemperatur des Glasverbindungsmittels 4 geringer.

In einer Ausführungsform ist der Anteil Bismut im Glasverbindungsmittel 4 derart gewählt, dass die Schmelztemperatur bevorzugt unterhalb 650°C liegt. Neben dem oben erwähnten Vorteil ist es bei Temperaturen unterhalb 650°C auch möglich, eine Wärmeeinwirkung, beispielsweise durch Wärmeleitung im Keramikelement 3 oder im Legierungselement 2, oder durch Konvektion oder durch Wärmestrahlung, auf Komponenten nahe der Verbindung 1 zu minimieren und so einer Alterung oder Beschädigung der Komponenten oder des Legierungselements 2 oder des Keramikelements 3 vorzubeugen.

Als Glasverbindungsmittel 4 ist beispielsweise ein Glas geeignet, welches mehr als 50% Bi₂O₃, 1% bis 10% B₂O₃, 10% bis 50% ZnO, 1% bis 10% SiO₂, 0.1% bis 1% Al₂O₃ aufweist. Das vorgenannte Glasverbindungsmittel 4 weist eine Verglasungstemperatur von etwa 520°C auf. Als Glasverbindungsmittel 4 ist beispielsweise auch ein Glas geeignet, welches mehr als 50% Bi₂O₃, 1% bis 10% B₂O₃, 1% bis 10% ZnO, 0.1% bis 1% CeO₂ aufweist. Das vorgenannte Glasverbindungsmittel 4 weist eine Verglasungstemperatur von etwa 620°C auf. Als Glasverbindungsmittel 4 ist zudem auch ein Glas geeignet, welches mehr als 50% Bi₂O₃, 1% bis 10% B₂O₃, 1% bis 10% ZnO, 0.1% bis 1% CeO₂, 0.1% bis 1% ZrO₂ aufweist. Die Verglasungstemperatur des vorgenannten Glasverbindungsmittels 4 liegt im Bereich zwischen etwa 450°C und etwa 500°C.

Das Keramikelement 3 ist in einer Ausführungsform elektrisch isolierend. Als elektrisch isolierend werden hierin Materialien bezeichnet, die einen spezifischen Widerstand von mindestens 10⁹ Ω·cm bei Raumtemperatur aufweisen. Das elektrisch isolierende Keramikelement 3 ist vorteilhaft für elektrotechnische Anwendungen, in denen ein elektrisch leitendes Legierungselement 2 durch ein elektrisch isolierendes Keramikelement 3 von der Umgebung elektrisch isoliert wird. Geeignete Materialien für ein elektrisch isolierendes Keramikelement 3 sind beispielsweise Keramiken, die einen Anteil von mindestens 70% Aluminiumoxid, Zirkonoxid, Siliziumoxid, Yttriumoxid oder einer Mischung aus diesen Stoffen aufweisen. Für Anwendungen, in denen eine hohe Isolation nötig ist, wird ein Anteil vorgenannter Stoffe von mindestens 95% bevorzugt. Eine solche Anwendung ist beispielsweise bei Verwendung von piezoelektrischen Messelementen gegeben, welche unter Krafteinfluss piezoelektrische Ladungen erzeugen. Die piezoelektrischen Ladungen der Messelemente müssen möglichst verlustfrei zur Messung erhalten werden. Es hat sich gezeigt, dass aus Kostengründen ein Verbindungselement aus Keramik 3 umfassend 80% bis 98% Aluminiumoxid mit einem Wärmeausdehnungskoeffizienten von etwa 6·10⁻⁶ K⁻¹ besonders vorteilhaft ist.

Die eingesetzte Keramik kann ein polykristallines und/oder ein einkristallines Gefüge aufweisen. Ein Beispiel für ein einkristallines Gefüge ist Saphir.

Das Legierungselement 2 weist in einer Ausführungsform ein polykristallines Gefüge auf. Unter einem polykristallinen Gefüge wird ein Gefüge verstanden, welches mehrere kristalline Zonen mit unterschiedlicher Ausrichtung des Kristallgitters aufweist. Diese kristallinen Zonen sind dem Fachmann auch als kristalline Körner bekannt. Diese Körner weisen eine Ausdehnung auf, welche als Korngrösse bezeichnet ist und nach ASTM International Standard Test Method E112-10 bestimmbar ist. Im Fall von Legierungen mit polykristallinen Gefüge ist die mittlere Korngrösse eine wichtige Eigenschaft. So hat sich gezeigt, dass für eine präzise Fertigung von Membranen, Gehäusen, Vorspannhülsen, und anderen metallischen Bauelementen mit zum Teil geringen geometrischen Dimensionen unterhalb 0.1 mm die mittlere Korngrösse kleiner als die geometrische Dimension sein muss. Bei elektronischen und elektrotechnischen Anwendungen kommen oft geometrische Dimensionen von metallischen Bauelementen im Bereich von 0.10 mm bis zu 0.02 mm vor. Daher ist für das Legierungselement 2 eine Legierung mit einem polykristallinen Gefüge mit einer mittleren Korngrösse kleiner 0.01 mm bevorzugt.

Das Legierungselement 2 ist in einer Ausführungsform ein martensitischer Stahl. Martensitische Stähle sind vorteilhaft, da sie eine feinkörniges Gefüge mit einer mittleren Korngrösse unter 0.01 mm aufweisen und somit Strukturen in gefertigten Teilen oder Bauelementen mit einer Stärke in der Grössenordnung der Korngrösse erlauben. Dies ist insbesondere für dünne elektrisch leitende Elemente in der Elektronik, Elektrotechnik oder Feinmechanik vorteilhaft. Ein martensitischer Stahl ist beispielsweise einer der Stähle mit EN Werkstoffnummern 1.4542, 1.4534 oder 1.4614.

Die Erfindung umfasst auch eine elektrische Durchführung 5, welche mindestens eine Verbindung 1 umfasst, wobei die Verbindung 1 eine Verbindung zwischen einem Legierungselement 2 und einem Keramikelement 3 mittels eines Glasverbindungsmittels 4 ist, wobei das Keramikelement 3 einen bereits beschriebenen Mischbereich 10 aufweist.

Eine elektrische Durchführung 5 weist ein Gehäuse 7 auf, welches im Sinne der Verbindung 1 einem Legierungselement 2 entspricht. Das Gehäuse 7 weist eine entlang einer Längsachse L ausgestaltete Öffnung 71 auf. Die Öffnung 71 weist eine Öffnungswandung 72 auf. Die Öffnungswandung 72 umfasst zumindest abschnittsweise entlang der Längsachse L radial einen lang ausgestalteten elektrischen Leiter 6. Im Folgenden wird für einen elektrischen Leiter 6 die Kurzform Leiter 6 verwendet. Der Leiter 6 ist von der Öffnungswandung 72 elektrisch isoliert. Der Leiter 6 ist in keinem direkten Kontakt mit der Öffnungswandung 72. Der Leiter 6 ist im Sinne der Verbindung 1 ein Legierungselement 2. Mindestens ein Keramikelement 3 ist zumindest teilweise innerhalb der Öffnung 71 angeordnet, wobei das Keramikelement 3 den Leiter 6 zumindest Abschnittsweise entlang der Längsachse L radial umfasst. Beispielsweise weist die Öffnung 71 einen kreisförmigen Querschnitt auf und erstreckt sich entlang der Längsachse L. Das Keramikelement 3 ist in diesem Fall beispielsweise hohlzylinderförmig mit der Zylinderachse entlang der Längsachse L und mit einer mittleren Öffnung 31 mit beispielsweise kreisförmigen Querschnitt. In der Öffnung 31 des Keramikelements 3 ist der Leiter 6 angeordnet, dessen Querschnitt mit dem Querschnitt der Öffnung 31 des Verbindungselements weitgehend übereinstimmt. Selbstverständlich sind auch rechteckige oder vieleckige oder jedwede andere Querschnitte vorgenannter Öffnungen 31,71 und Legierungselemente 2, Keramikelements 4, Leiter 6 ausführbar.

Ein Glasverbindungsmittel 4 ist innerhalb der Öffnung 71 anschliessend an das Keramikelement 3 angeordnet. Das Glasverbindungsmittel 4 umfasst den Leiter 6 zumindest Abschnittsweise entlang der Längsachse L radial. Das Glasverbindungsmittel 4 schliesst dabei direkt an das Keramikelement 3 an. Das Glasverbindungsmittel 4 kann dabei ebenso wie das Keramikelement 3 hohlzylinderförmig sein. Das im Falle hohlzylinderförmigen Glasverbindungsmittel 4 liegen Keramikelement 3 und Glasverbindungsmittel 4 mit Stirnflächen des Hohlzylinders aneinander.

Der Leiter 6 und das Keramikelement 3 sind mittels einer bereits beschriebenen Verbindung 1 mittels Glasverbindungsmittel 4 verbunden. Die Verbindung 1 ist die Verbindung eines Legierungselements 2, hier der Leiter 6, mit dem Keramikelement 3 mittels des Glasverbindungsmittels 4. Das Glasverbindungsmittel 4 ist mit dem Leiter 6 mit stoffschlüssiger Verbindung 24 verbunden. Des Weiteren ist das Glasverbindungsmittel 4 mit stoffschlüssiger Verbindung 34 mit dem Keramikelement 3 verbunden. Das Glasverbindungsmittel 4 weist einen Schmelzpunkt unter 800°C auf. Das Glasverbindungsmittels 4 weist wie bereits beschrieben einen Anteil Bismut von mindestens 10% auf.

Die Öffnungswandung 72 und das Keramikelement 3 sind mittels einer weiteren bereits beschriebenen Verbindung 1 mittels Glasverbindungsmittel 4 verbunden.

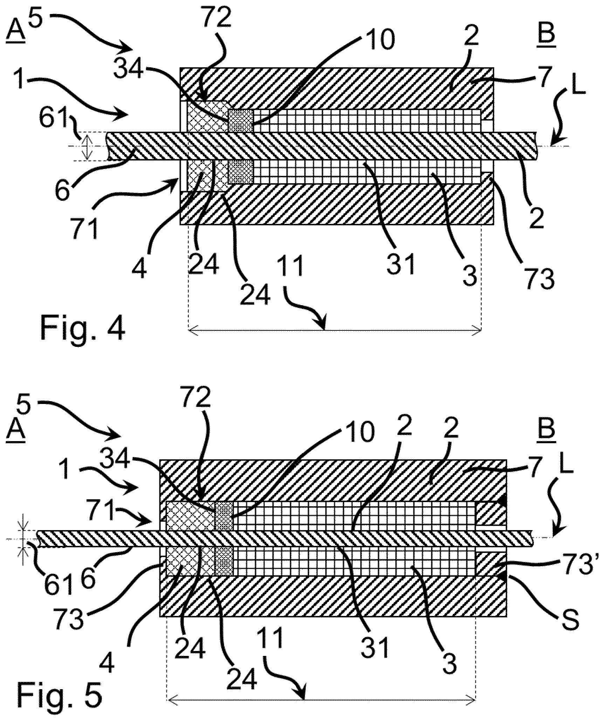

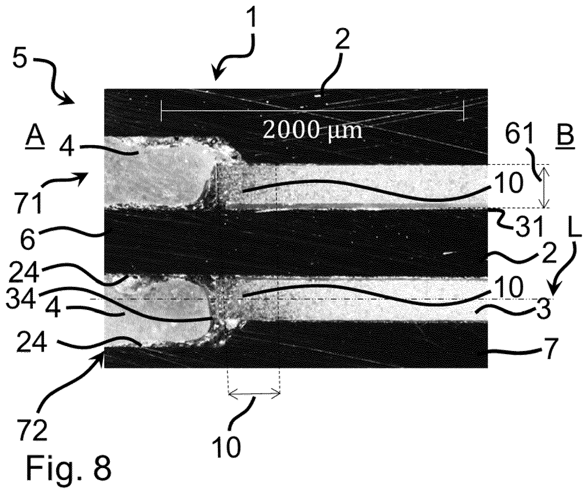

Leiter 6 und Öffnungswandung 72 sind mit demselben Keramikelement 3 verbunden, wobei das Keramikelement 3 den Leiter 6 von der Öffnungswandung 72 elektrisch isoliert. Mögliche Ausführungsformen der elektrischen Durchführung 5 sind in Figur 4 bis 9 dargestellt. Die beiden Verbindungen 1 können auch Merkmale der oben beschriebenen Ausführungsformen aufweisen. Insbesondere können die Verbindungen 1 auch eine Kombination der Merkmale der oben beschriebenen Ausführungsformen aufweisen.

In den Ausführungsformen der Figur 4 bis 9 ist die Verbindung 1 von Keramikelement 3 mit Leiter 6 und Öffnungswandung 72 mittels eines einstückigen Glasverbindungsmittels 4 ausgeführt. Das Glasverbindungsmittel 4 liegt bevorzugt in Form eines Sinterkörpers vor. Ein Sinterkörper ist ein Körper, bei dem ein feinkörniger Ausgangsstoff, beispielsweise Glaspulver, beispielsweise unter Druck gepresst und anschliessend auf eine Sintertemperatur erhitzt oder beispielsweise unter Druck gepresst und gleichzeitig auf eine Sintertemperatur erhitzt und wieder abgekühlt wurde, sodass die Form des Körpers erhalten bleibt, jedoch das Pulver zu einem festen Körper verbunden ist. Sinterkörper können auch durch Extrusionstechnik und Sinterung hergestellt werden. Die Sintertemperatur bleibt dabei jeweils unterhalb der Schmelztemperatur des Glasverbindungsmittels 4.

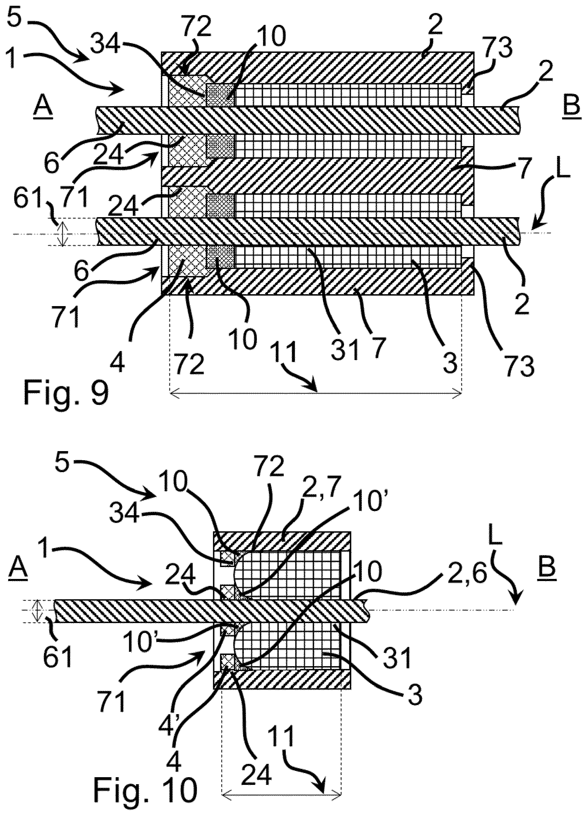

In einer weiteren Ausführungsform nach Fig. 10 ist die Verbindung 1 von Keramikelement 3 mit Leiter 6 mittels eines Glasverbindungsmittels 4 ausgeführt. Und die Verbindung 1 von Keramikelement 3 mit Öffnungswandung 72 mittels eines Glasverbindungsmittels 4' ausgeführt. Das Keramikelement 3 weist jeweils anschliessend an das Glasverbindungsmittel 4 einen Mischbereich 10,10' auf. Die in dieser Ausführungsform nach Fig. 10 genannten Glasverbindungsmittel 4, 4' müssen nicht unbedingt die gleiche Zusammensetzung des Glas aufweisen.

Die elektrische Durchführung 5 ist geeignet elektrische Ladungen aus einem ersten Bereich A in einen zweiten Bereich B zu leiten. In einer Ausführungsform ist der erste Bereich A vom zweiten Bereich B hermetisch dicht trennt. Unter hermetisch dicht wird dabei eine Verbindung 1 bezeichnet, deren Leckrate geringer als 10⁻⁵ Pa·m³·s⁻¹ für Helium beträgt. Entsprechende Bestimmung der Leckrate ist in DIN EN 1779 beschrieben.

Bevorzugt beeinträchtigen dauerhafte oder temporäre Temperaturen bis zu 350°C die Dichtigkeit der elektrischen Durchführung 5 nicht. Die Temperatur von 350° liegt dabei unterhalb der Verglasungstemperatur der für ein Glasverbindungsmittel 4 möglichen Materialien. Dies ist vorteilhaft, wenn die elektrische Durchführung 5 in Hochtemperaturanwendungen oberhalb 350°C genutzt wird, beispielsweise in Verbrennungskraftmaschinen. Bei Hochtemperaturanwendungen wird ein Endelement 73 vorgesehen, um die strukturelle Integrität der elektrischen Durchführung 5 zu unterstützen. Am Endelement 73 stützt sich das Keramikelement 3 ab, sollten Kräfte entlang der Längsachse L auf das Keramikelement 3 wirken. Solche Kräfte treten beispielsweise durch eine Beaufschlagung des ersten Bereichs A oder des zweiten Bereichs B mit Druck auf. Das Endelement 73 ist als Verjüngung der Öffnung 71 ausgeführt, welche die Öffnung 71 derart verjüngt, dass ein Querschnitt der Öffnung 71 zumindest teilweise kleiner ist als ein Querschnitt des Keramikelements 3, wie in Figuren 4 bis 7 und 9 gezeigt.

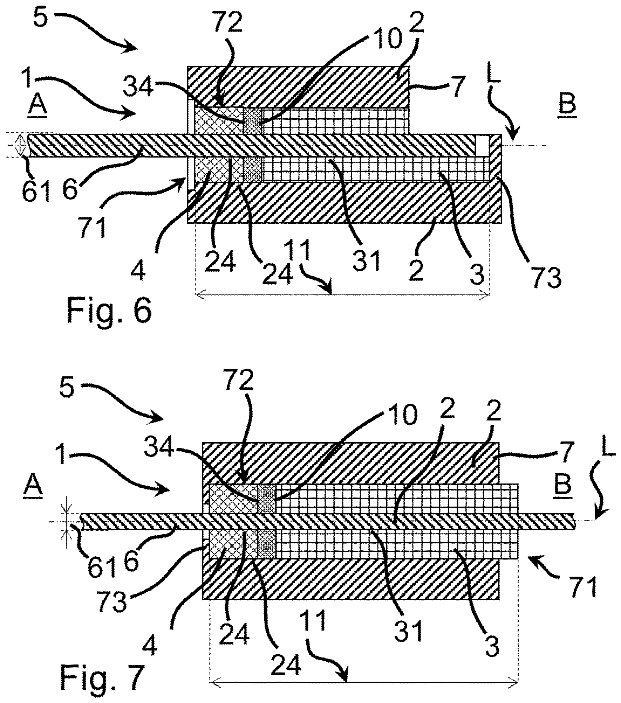

Das Keramikelement 3 kann dabei direkt am Endelement 73 anliegen, wie in den Ausführungsformen der Figuren 4, 6 und 9 gezeigt. Das Keramikelement 3 kann auch unter Zwischenlage des Glasverbindungsmittels 4 am Endelement 73 anliegen, wie in der Ausführungsform der Figur 7 gezeigt.

In der Ausführungsform der Figur 5 ist neben Endelement 73 ein weiteres Endelement 73' vorhanden, sodass das Keramikelement 3 sowohl am Endelement 73' anliegt als auch unter Zwischenlage des Glasverbindungsmittels 4 am Endelement 73 anliegt. Das weitere Endelement ist dabei mit dem Gehäuse 7 beispielsweise mittels einer Schweissung S verbundenen, sodass Glasverbindungsmittel 4, Keramikelement 3 und Leiter 6 vorgängig in die Öffnung 71 des Gehäuses 7 einsetzbar sind.

Ein Endelement 73, 73' ist vorteilhaft für die strukturelle Integrität und damit die Dichtigkeit der Verbindung 1. Bei Temperaturen über 350°C kann nämlich das Glasverbindungsmittel 4 eine niedrigere Festigkeit aufweisen als bei Raumtemperatur. Wirken zugleich Kräfte auf das Keramikelement 3 entlang der Längsachse L, kann es so zu einer Beschädigung der Verbindung 1 kommen. Dies geschieht nicht, wenn wirkende Kräfte durch das Endelement 73 abgeleitet werden. Der Fachmann wählt eine der vorgenannten Ausführungsformen nach der Richtung der zu erwartenden Kräfte entlang der Längsachse L aus.

Die elektrische Durchführung 5 weist eine Isolationsstrecke 11 auf. Die Isolationsstrecke 11 ist entlang der Längsachse L dort definiert, wo der Leiter 6 innerhalb der Öffnung 71 entlang der Längsachse L radial vom Keramikelement 3 und vom Glasverbindungsmittel 4 umfasst ist. Somit ist die Isolationsstrecke 11 des Leiters 6 entlang der Längsachse L radial vom Keramikelement 3 und vom Glasverbindungsmittel 4 umfasst. In einer Ausführungsform ist das Verhältnis von Isolationsstrecke 11 und Leiterdurchmesser 61 grösser drei. Dies hat den Vorteil, dass die elektrische Durchführung 5 unempfindlich gegenüber Hebelkräften senkrecht zur Längsachse L ist, da der Leiter 6 über die gesamte Isolationsstrecke 11 radial an der Öffnungswandung 72 abgestützt ist.

Vorteilhaft ist das Gehäuse 7 aus einem der Stähle 1.4542, 1.4534 oder 1.4614 ausgeführt. Ebenso ist vorteilhaft der Leiter 6 aus einem der Stähle 1.4542, 1.4534 oder 1.4614 ausgeführt ist. Vorteilhaft ist dabei das Gehäuse 7 aus 1.4542 ausgeführt, da es eine gute Zerspanbarkeit aufweist. Auch Stahl 1.4614 weist eine gute Zerspanbarkeit auf. Eine gute Zerspanbarkeit bedeutet einen bessere Zerspanbarkeit als beispielsweise Tantal aus dem Stand der Technik. Und der Leiter 6 ist vorteilhaft aus 1.4542 ausgeführt. Der Leiter kann jedoch auch aus einem anderen der oben genannten Stähle ausgeführt sein, beispielsweise aus 1.4614, welcher keine gute Zerspanbarkeit aufweist aber kalt zu einer länglichen Form gezogen werden kann.

Um eine kostengünstige elektrische Durchführung 5 zu fertigen, wird das Glasverbindungsmittel 4 als Sinterkörper bereitgestellt. Die Herstellung von gesinterten Körpern ist kostengünstig und in grossen Stückzahlen möglich. Jedoch muss das Glasverbindungsmittel 4 bereits vor der Erstellung der stoffschlüssigen Verbindung 24, 34 an den zu verbindenden Elementen 2,3,6,7 anliegen. Ist der Abstand zu gross, so erfolgt bei einem Aufschmelzen des Glasverbindungsmittels 4 beispielsweise keine durchgehende und porenfreie und/oder lunkerfreie stoffschlüssige Verbindung 24 zur Öffnungswandung 72. Sinterkörper weisen jedoch durch ihre Herstellungsweise grosse Toleranzen auf. So kommt es bei der Herstellung oft zu einer Schwindung, weil sich das Pulver des Ausgangsmaterials verdichtet. Toleranzen unter 10% sind für Sinterkörper mit zunehmender Länge nur unter grösstem Aufwand und den damit verbundenen Kosten zu erhalten. Jedoch muss eine elektrische Durchführung 5 eine Isolierstrecke 11 aufweisen, welche grösser ist als der Durchmesser der Öffnung 71 im Gehäuse 7 um keinen Schaden bei potenziell auftretenden Hebelkräften senkrecht zur Längsachse L zu nehmen. Es hat sich gezeigt, dass eine besonders kostengünstige elektrische Durchführung 5 hergestellt werden kann, indem das Keramikelement 3 mindestens 2/3 des Durchmessers der Öffnung 71 in Richtung der Längsachse L ausgeführt ist, während die Länge des Glasverbindungsmittels 4 entlang der Längsachse L mindestens zweimal kleiner ist als der Durchmesser des Verbindungsmittels 4 senkrecht zur Längsachse L. Dies ist vorteilhaft, da das Glasverbindungsmittel 4 nicht hauptsächlich zur Länge der Isolierstrecke 11 beitragen muss, da der überwiegende Teil der Isolierstrecke 11 durch die Länge des Keramikelements 3 isoliert ist.

Eine elektrische Durchführung 5 durch einen Körper wird beispielsweise mittels folgender Schritte ausgeführt.

Einbringen der lang ausgestalteten Öffnung 71 in das Gehäuse 7. Dies kann beispielsweise durch zerspanenden Verfahren wie Drehen, Bohren, Fräsen oder Schleifen oder durch Wasserstrahlschneiden, Laserschneiden, Erodieren oder ähnliche geeignete Bearbeitungsmethoden ausgeführt werden.

Anordnen des Keramikelements 3 zumindest teilweise in der Öffnung 71 und parallel zur Längsachse L, wobei das Keramikelement 3 hohlzylinderförmig ist. Es ist auch eine andere Formgebung denkbar, bei denen die Aufgabe des Keramikelements 3 gewahrt bleibt, nämlich die Isolation des Leiters 6 vom Gehäuse 7.

Anordnen des Glasverbindungsmittels 4 zumindest teilweise in der Öffnung 71, parallel zur Längsachse L und anstossend an das Keramikelement 3, wobei das Glasverbindungsmittel 4 hohlzylinderförmig ist.

Anordnen des Leiters 6 innerhalb des hohlzylinderförmigen Keramikelements 3 und innerhalb des Glasverbindungsmittels 4, so dass das Keramikelement 3 und das Glasverbindungsmittel 4 den Leiter 6 zumindest teilweise entlang der Längsachse L radial umschliessen.

Zumindest teilweises Verflüssigen des Glasverbindungsmittels 4 durch Erhitzen des derart angeordneten Leiters 6 und Gehäuses 7 und des Glasverbindungsmittels 4 zu einer Temperatur oberhalb der Schmelztemperatur des Glasverbindungsmittels 4. Eindringen von zumindest bismuthaltigen Anteilen des Glasverbindungsmittels 4 in das Keramikelement 3 und Bilden des Mischbereichs 10.

Änderung der Temperatur des derart angeordneten Leiters 6 und Gehäuses 7 und des Glasverbindungsmittels 4 zu einer Temperatur unterhalb der Schmelztemperatur des Glasverbindungsmittels 4 und Bildung einer Verbindung 1 umfassend eine stoffschlüssige Verbindung 24 zwischen Glasverbindungsmittel 4 und Leiter 6 und eine stoffschlüssigen Verbindung 34 zwischen Glasverbindungsmittel 4 und Keramikelement 4; sowie Bildung einer weiteren Verbindung 1 umfassend eine stoffschlüssigen Verbindung 24 zwischen Glasverbindungsmittel 4 und Gehäuse 7 und eine stoffschlüssigen Verbindung 34 zwischen Glasverbindungsmittel 4 und Keramikelement 3.

Die Ausdehnung des Mischbereichs 10 ist mit der zeitliche Dauer gegeben, während der das Glasverbindungsmittel 4 seine Schmelztemperatur überschreitet. Die Ausdehnung des Mischbereichs 10 kann auch über die Höhe der Temperatur oberhalb der Schmelztemperatur des Glasverbindungsmittels 4 beeinflusst werden.

In einer bevorzugten Ausführungsform ist das Legierungselement 2 respektive der Leiter 6 und/oder das Gehäuse 7 korrosionsbeständig. Korrosionsbeständig sind Legierungen, welche einen Anteil Chrom von mindestens 10.5% aufweisen.

In einer Ausführungsform ist mindestens ein Legierungselement 2, und/oder ein Keramikelement 3, und/oder ein Leiter 6, und/oder ein Gehäuse 7, mit einer Schicht Gold versehen. Dies ist vorteilhaft, da die Goldschicht die Wärmeausdehnung nicht wesentlich beeinflusst und das Legierungselement 2, und/oder das Keramikelement 3, und/oder der Leiter 6, und/oder das Gehäuse 7, durch die Goldschicht vor Umwelteinflüssen geschützt ist, da Gold als Edelmetall eine bekannt gute chemische Beständigkeit aufweist. Insbesondere ist vorteilhaft der Leiter 6 mit einer Schicht Gold beschichtet. Dies erhöht die Leitfähigkeit gegenüber einer oben beschriebenen martensitischen Legierung. Gleichbedeutend mit Gold kann Silber oder Platin eingesetzt werden. Ein derart beschichtetes Legierungselement 2, und/oder Keramikelement 3, und/oder Leiter 6, und/oder Gehäuse 7, hat im Sinne der Erfindung weiterhin den Wärmeausdehnungskoeffizienten des beschichteten Materials.

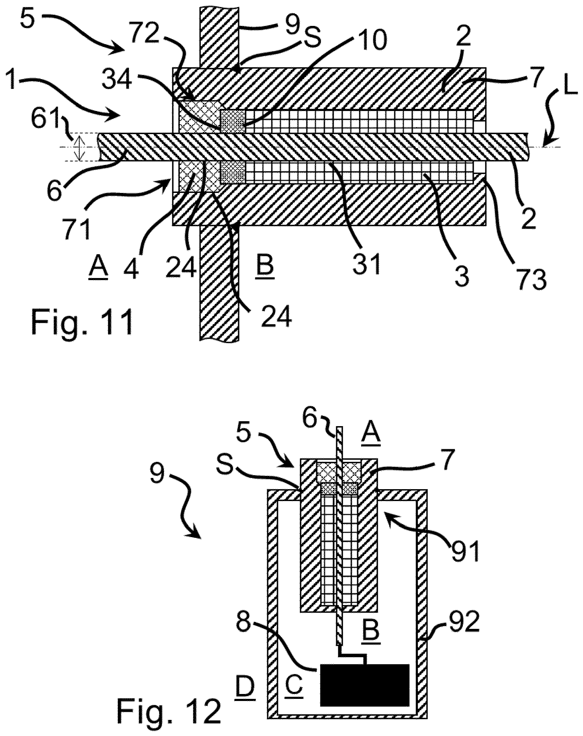

In einer Ausführungsform ist das Gehäuse 7 einer elektrische Durchführung 5 mit einem Sensorgehäuse 92 oder Gerätegehäuse 92 durch eine stoffschlüssige Verbindung S verbunden, beispielsweise durch eine Lötverbindung oder eine Schweissverbindung wie exemplarisch in Fig. 11 dargestellt. Eine stoffschlüssige Verbindung S kann auch eine Klebeverbindung mittels eines Klebstoffes sein. Ein Sensorgehäuse 92 oder Gerätegehäuse 92 ist ein metallisches Bauelement aus einem Metall oder einer Legierung. Vorzugsweise ist ein Gerätegehäuse 92 oder Sensorgehäuse 92 aus derselben Legierung wie das Gehäuse 7 ausgeführt oder zumindest aus einem martensitischen Stahl.

Die Erfindung betrifft auch einen Sensor 9, wie beispielhaft in Fig. 12 dargestellt. Der Sensor 9 umfassend mindestens ein Sensorelement 8, ein metallisches Sensorgehäuse 92 und mindestens eine elektrische Durchführung 5. Das Sensorgehäuse umschliesst weitgehend einen inneren Bereich C. Im inneren Bereich C ist das mindestens eine Sensorelement 8 angeordnet. Das Sensorgehäuse 92 weist mindestens eine Durchführungsöffnung 91 auf. In jede Durchführungsöffnung 91 ist eine der mindestens einen elektrischen Durchführung 5 eingebracht. Das mindestens eine Sensorelement 8 ist elektrisch leitend mit dem mindestens einen Leiter 6 elektrisch leitend verbunden. Die elektrische Durchführung 5 verbindet den inneren Bereich C mit einem äusseren Bereich D durch einen der mindestens einen Leiter 6 elektrisch leitend. Das Sensorelement 8 ist eingerichtet eine physikalische Grösse zu erfassen. Ein Signal der physikalischen Grösse ist über den Leiter 6 im äusseren Bereich D abgreifbar. Die elektrische Durchführung 5 ist durch eine stoffschlüssige Verbindung S, beispielsweise eine Lötverbindung oder eine Schweissverbindung, mit dem Sensorgehäuse 92 verbunden. Auch andere stoffschlüssige Verbindungen S, beispielsweise mittels eines Klebstoffs, sind denkbar.

Bevorzugt ist das Sensorgehäuse 92 aus dem gleichen Material wie das Gehäuse 7 der Durchführung 5 gefertigt. Dies ist insbesondere ein martensitischer Stahl, beispielsweise einer der Stähle mit EN Werkstoffnummern 1.4542, 1.4534 oder 1.4614.

Ein Sensor 9 ist beispielsweise ein Beschleunigungssensor, ein Kraftsensor, ein Momentsensor, ein Drucksensor oder ein Temperatursensor. Insbesondere bei den ersten vier Sensoren kommen in einigen Ausführungsformen piezoelektrische Sensorelemente 8 zum Einsatz, welche bei mechanischer Verformung piezoelektrische Ladungen auf Ihren Oberflächen generieren. Die piezoelektrischen Sensorelemente 8 müssen hermetisch dicht getrennt von einem äusseren Bereich D im inneren Bereich C des Sensors 9 angeordnet sein. Dies schützt die piezoelektrische Sensorelemente 8 vor Umwelteinflüssen, insbesondere Feuchtigkeit. Um piezoelektrische Ladungen präzise zu erfassen benötigt der Sensor einen hohen Isolationswiderstand, welcher beim Eindringen von Feuchtigkeit in den Sensor 9 nicht mehr gewährleistet ist.

Bevorzugt kommen in einem Beschleunigungssensor 9, einem Kraftsensor 9, einem Momentsensor 9, einem Drucksensor 9 oder einem Temperatursensor 9 in einigen Ausführungsformen auch piezoresistive Sensorelemente 8 zum Einsatz, welche bei mechanischer Einwirkung eine elektrische Widerstandsänderung erfahren. Auch diese Sensorelemente 8 müssen hermetisch dicht getrennt von einem äusseren Bereich D im inneren Bereich C des Sensors 9 angeordnet sein.

Es sind weitere Ausführungsformen einer Verbindung 1 von einem Keramikelement 3 und einem Legierungselement 2 möglich, die verschiedene Merkmale der in dieser Schrift offenbarten Ausführungsformen miteinander kombinieren.

Ebenso sind weitere Ausführungsformen einer elektrischen Durchführung 5 möglich, die verschiedene Merkmale der in dieser Schrift offenbarten Ausführungsformen miteinander kombinieren.

Ebenso sind weitere Ausführungsformen eines Sensors 9 möglich, die verschiedene Merkmale der in dieser Schrift offenbarten Ausführungsformen miteinander kombinieren.

### Bezugszeichenliste

- 1: Verbindung
- 2: Legierungselement
- 3: Keramikelement
- 4: Glasverbindungsmittel
- 5: Durchführung
- 6: Leiter
- 7: Gehäuse
- 8: Sensorelement
- 9: Sensor
- 10, 10': Mischbereich
- 11: Isolationsstrecke
- 24: stoffschlüssige Verbindung
- 31: Öffnung
- 34: stoffschlüssige Verbindung
- 61: Leiterdurchmesser
- 71: Öffnung
- 72: Öffnungswandung
- 73, 73': Endelement
- 91: Durchführungsöffnung
- 92: Sensorgehäuse, Gerätegehäuse
- A, B: Bereich
- C: Innerer Bereich
- D: Äusserer Bereich
- L: Längsachse
- S: Stoffschlüssige Verbindung, Schweissung

## Patentansprüche

1. Verbindung (1), wobei die Verbindung (1) ein Legierungselement (2) mit einem Keramikelement (3) verbindet; mittels einem Glasverbindungsmittel (4) welches mit dem Legierungselement (2) mittels einer stoffschlüssigen Verbindung (24) verbunden ist und wobei das Glasverbindungsmittel (4) mit dem Keramikelement (3) mittels einer weiteren stoffschlüssigen Verbindung (34) verbunden ist; **dadurch gekennzeichnet, dass** das Glasverbindungsmittel (4) aus einem Glas mit einen Schmelzpunkt unter 800°C ausgeführt ist; dass das Glasverbindungsmittel (4) einen Wärmeausdehnungskoeffizienten von mindestens 9·10⁻⁶ K⁻¹ aufweist; dass das Glasverbindungsmittel (4) einen Anteil Bismut von mindestens 10% aufweist; dass das Legierungselement (2) einen Wärmeausdehnungskoeffizienten von mindestens 9·10⁻⁶ K⁻¹ aufweist; dass das Keramikelement (3) einen Wärmeausdehnungskoeffizienten von maximal 8·10⁻⁶ K⁻¹ aufweist; dass die stoffschlüssige Verbindung (34) des Glasverbindungsmittels (4) mit dem Keramikelement (3) einen Mischbereich (10) aufweist; dass der Mischbereich (10) ein Teilbereich des Keramikelements (3) ist; und dass der Mischbereich (10) einen höheren Anteil Bismut als das Keramikelement (3) ausserhalb des Mischbereichs (10) aufweist.

2. Verbindung (1) nach Anspruch 1, **dadurch gekennzeichnet, dass** der Mischbereich (10) räumlich anschliessend an das Glasverbindungsmittel (4) angeordnet ist; und dass der Mischbereich (10) einen graduell zum Glasverbindungsmittel (4) zunehmenden Anteil Bismut aufweist.

3. Verbindung (1) nach einem der vorgehenden Ansprüche, **dadurch gekennzeichnet, dass** der Anteil an Bismut vom Glasverbindungsmittel (4) zum Mischbereich (10) sprunghaft abnimmt.

4. Verbindung (1) nach dem vorgehenden Anspruch, **dadurch gekennzeichnet, dass** der Mischbereich (10) eine räumliche Ausdehnung von mindestens 0.001 mm vom Glasverbindungsmittel (4) aus aufweist; und dass der Mischbereich begrenzt ist durch die Ausdehnung des Keramikelements (3) und innerhalb des Keramikelements (3) durch eine Ebene in der der Anteil von Bismut im Keramikelement (3) 1/e des Anteils von Bismut im Keramikelement (3) im Mischbereich (10) direkt anschliessend an das Glasverbindungsmittel (4) beträgt.

5. Verbindung (1) nach einem der vorgehenden Ansprüche, **dadurch gekennzeichnet, dass** das Glasverbindungsmittel (4) frei von Blei ist; und dass das Glasverbindungmittel (4) aus einem Glas mit einer Schmelztemperatur unterhalb 800°C, vorteilhaft unterhalb 650°C ausgeführt ist.

6. Verbindung (1) nach einem der vorgehenden Ansprüche, **dadurch gekennzeichnet, dass** das Keramikelement (3) elektrisch isolierend ist; dass das Keramikelement (3) einen Anteil Aluminiumoxid, Zirkonoxid, Siliziumoxid oder einer Mischung aus diesen Stoffen aufweist; und dass der Anteil mindestens 70%, bevorzugt mindestens 95% ist.

7. Verbindung (1) nach einem der vorgehenden Ansprüche, **dadurch gekennzeichnet, dass** das Legierungselement (2) ein polykristallines Gefüge aufweist; und dass die mittlere Korngrösse des polykristallinen Gefüges im Mittel kleiner 0.01 mm ist.

8. Verbindung (1) nach einem der vorgehenden Ansprüche, **dadurch gekennzeichnet, dass** das Legierungselement (2) ein martensitischer Stahl, beispielsweise einer der Stähle mit EN Werkstoffnummern 1.4542, 1.4534 oder 1.4614 ist.

9. Verbindung (1) nach einem der vorgehenden Ansprüche, **dadurch gekennzeichnet, dass** das Glasverbindungsmittel (4) mehr als 50% Bi₂O₃, 1% bis 10% B₂O₃, 10% bis 50% ZnO, 1% bis 10% SiO₂, 0.1% bis 1% Al₂O₃ aufweist oder dass das Verbindungsmittel (4) mehr als 50% Bi₂O₃, 1% bis 10% B₂O₃, 1% bis 10% ZnO, 0.1% bis 1% CeO₂ aufweist oder dass das Verbindungsmittel (4) mehr als 50% Bi₂O₃, 1% bis 10% B₂O₃, 1% bis 10% ZnO, 0.1% bis 1% CeO₂, 0.1% bis 1% ZrO₂ aufweist.

10. Elektrische Durchführung (5); wobei die elektrische Durchführung (5) ein Gehäuse (7) aufweist, welches ein Legierungselement (2) ist; wobei das Gehäuse (7) eine entlang einer Längsachse (L) ausgestaltete Öffnung (71) mit einer Öffnungswandung (72) aufweist; wobei ein lang ausgestalteter elektrischer Leiter (6) aus zumindest abschnittsweise entlang der Längsachse (L) radial von der Öffnungswandung (72) umfasst ist; wobei der Leiter (6) ein weiteres Legierungselement (2) ist; wobei mindestens ein Keramikelement (3) zumindest teilweise innerhalb der Öffnung (71) angeordnet ist, wobei das Keramikelement (3) den Leiter (6) zumindest Abschnittsweise entlang der Längsachse (L) radial umfasst; wobei das Keramikelement (3) elektrisch isolierend ist; wobei der Leiter (6) von der Öffnungswandung (72) elektrisch isoliert ist; wobei ein Glasverbindungsmittel (4) innerhalb der Öffnung (71) anschliessend an das Keramikelement (3) angeordnet ist; wobei das Glasverbindungsmittel (4) den Leiter (6) zumindest Abschnittsweise entlang der Längsachse (L) radial umfasst; **dadurch gekennzeichnet, dass** das, der Leiter (6) und das Keramikelement (3) mittels einer Verbindung (1) nach einem der Ansprüche 1 bis 9 mittels Glasverbindungsmittel (4) verbunden sind; und dass die Öffnungswandung (72) und das Keramikelement (3) mittels einer weiteren Verbindung (1) nach einem der Ansprüche 1 bis 9 mittels Glasverbindungsmittel (4) verbunden sind.

11. Elektrische Durchführung (5) nach dem vorgehenden Anspruch, **dadurch gekennzeichnet, dass** die elektrische Durchführung (5) geeignet ist elektrische Ladungen aus einem ersten Bereich (A) in einen zweiten Bereich (B) zu leiten; und wobei die elektrische Durchführung (5) den ersten Bereich (A) vom zweiten Bereich (B) hermetisch dicht trennt.

12. Elektrische Durchführung (5) nach dem vorgehenden Anspruch, **dadurch gekennzeichnet, dass** dauerhafte oder temporäre Temperaturen bis zu 350°C die Dichtigkeit der elektrischen Durchführung (5) nicht beeinträchtigen.

13. Elektrische Durchführung (5) nach einem der Ansprüche 10 bis 12 **dadurch gekennzeichnet, dass** eine Isolationsstrecke (11) des Leiters (6) entlang der Längsachse (L) radial vom Keramikelement (3) und vom Glasverbindungsmittel (4) umfasst ist; und dass das Verhältnis von Isolationsstrecke (11) und Leiterdurchmesser (61) grösser drei ist oder dass die Länge des Verbindungsmittels (4) entlang der Längsachse (L) mindestens zweimal kleiner ist als der Durchmesser des Verbindungsmittels (4) senkrecht zur Längsachse (L).

14. Sensor (9), umfassend mindestens ein Sensorelement (8), ein metallisches Sensorgehäuse (92) und mindestens eine elektrische Durchführung (5) nach einem der Ansprüche 10 bis 13; wobei das Sensorgehäuse (92) einen inneren Bereich (C) weitgehend umschliesst; wobei das Sensorgehäuse (92) mindestens eine Durchführungsöffnung (91) aufweist; wobei in jede Durchführungsöffnung (91) eine der mindestens eine elektrische Durchführung (5) eingebracht ist; wobei die elektrische Durchführung (5) durch eine stoffschlüssige Verbindung (S), beispielsweise eine Lötverbindung oder eine Schweissverbindung oder eine Klebeverbindung, mit dem Sensorgehäuse (92) verbunden ist; wobei die elektrische Durchführung (5) den inneren Bereich (C) mit einem äusseren Bereich (D) durch einen der mindestens einen Leiter (6) elektrisch leitend verbindet; wobei das mindestens eine Sensorelement (8) im inneren Bereich (C) angeordnet ist; wobei das mindestens eine Sensorelement (8) eingerichtet ist eine physikalische Grösse zu erfassen; und wobei das mindestens eine Sensorelement (8) mit dem mindestens einen Leiter (6) 2 elektrisch leitend verbunden ist.

15. Verfahren zur Herstellung einer elektrischen Durchführung (5) durch einen Körper nach einem der Ansprüche 10 bis 13 **gekennzeichnet durch die Schritte:**
- Einbringen der lang ausgestalteten Öffnung (71) in das Gehäuse (7);
- Anordnen des Keramikelements (3) zumindest teilweise in der Öffnung (71) und parallel zur Längsachse (L), wobei das Keramikelement (3) hohlzylinderförmig ist;
- Anordnen des Glasverbindungsmittels (4) zumindest teilweise in der Öffnung (71), parallel zur Längsachse (L) und anstossend an das Keramikelement (3), wobei das Glasverbindungsmittel (4) hohlzylinderförmig ist;
- Anordnen des Leiters (6) innerhalb des hohlzylinderförmigen Keramikelements (3) und innerhalb des Glasverbindungsmittels (4), so dass das Keramikelement (3) und das Glasverbindungsmittel (4) den Leiter (6) zumindest teilweise entlang der Längsachse (L) radial umschliessen;
- Zumindest teilweises Verflüssigen des Glasverbindungsmittels (4) **durch** Erhitzen des derart angeordneten Leiters (6), Keramikelements (3), Gehäuses (7) und Glasverbindungsmittels (4) zu einer Temperatur oberhalb der Schmelztemperatur des Glasverbindungsmittels (4); Eindringen von zumindest bismuthaltigen Anteilen des Glasverbindungsmittels (4) in das Keramikelement (3) und Bilden des Mischbereichs (10);
- Änderung der Temperatur des derart angeordneten Leiters (6), Keramikelements (3), Gehäuses (7) und Glasverbindungsmittels (4) zu einer Temperatur unterhalb der Schmelztemperatur des Glasverbindungsmittels (4) und Bildung einer Verbindung (1) umfassend eine stoffschlüssige Verbindung (24) zwischen Glasverbindungsmittel (4) und Leiter (6) und eine stoffschlüssigen Verbindung (34) zwischen Glasverbindungsmittel (4) und Keramikelement (3); sowie Bildung einer Verbindung (1) umfassend eine stoffschlüssige Verbindung (24) zwischen Glasverbindungsmittel (4) und Gehäuse (6) und eine stoffschlüssigen Verbindung (34) zwischen Glasverbindungsmittel (4) und Keramikelement (3).

## Claims

1. A joint (1) wherein said joint (1) joins an alloy member (2) and a ceramic member (3); by means of a glass joining agent (4) which is joined to the alloy member (2) by means of a material bonded joint (24) and wherein the glass joining agent (4) is joined to the ceramic member (3) by means of another material bonded joint (34); **characterized in that** the glass joining agent (4) is made of a glass having a melting point below 800°C; said glass joining agent (4) having a coefficient of thermal expansion of at least 9·10⁻⁶ K⁻¹; said glass joining agent (4) having a bismuth content of at least 10%; said alloy member (2) having a coefficient of thermal expansion of at least 9·10⁻⁶ K⁻¹; said ceramic member (3) having a maximum coefficient of thermal expansion of 8·10⁻⁶ K⁻¹; wherein the material bonded joint (34) between the glass joining agent (4) and the ceramic member (3) comprises a mixing region (10); said mixing region (10) being a partial region of the ceramic member (3); and **in that** said mixing region (10) has a higher bismuth content compared to the bismuth content of the ceramic member (3) outside of the mixing region (10).

2. The joint (1) according to claim 1, **characterized in that** the mixing region (10) is located spatially adjacent to the glass joining agent (4); and **in that** the bismuth content in the mixing region (10) gradually increases towards the glass joining agent (4).

3. The joint (1) according to any of the preceding claims, **characterized in that** the bismuth content abruptly decreases from the glass joining agent (4) to the mixing region (10).

4. The joint (1) according to the preceding claim, **characterized in that** the mixing region (10) has a spatial extension from the glass joining agent (4) of at least 0.001 mm; and **in that** the mixing region is delimited by the extension of the ceramic member (3) and is further delimited within the ceramic member (3) by a plane in which the bismuth content in the ceramic member (3) equals 1/e of the bismuth content in the ceramic member (3) in the mixing region (10) directly adjacent to the glass joining agent (4) .

5. The joint (1) according to any of the preceding claims, **characterized in that** the glass joining agent (4) is free of lead; and **in that** the glass joining agent (4) is made of a glass having a melting temperature below 800°C, advantageously below 650°C.

6. The joint (1) according to any of the preceding claims, **characterized in that** the ceramic member (3) is electrically insulating; **in that** the ceramic member (3) contains aluminum oxide, zirconium oxide, silicon oxide or a mixture of these materials; and **in that** said content is at least 70%, preferably at least 95%.

7. The joint (1) according to any of the preceding claims, **characterized in that** the alloy member (2) has a polycrystalline structure; and **in that** the average grain size of the polycrystalline structure on average is less than 0.01 mm.

8. The joint (1) according to any of the preceding claims, **characterized in that** the alloy member (2) is a martensitic steel, for example one of the steels having the EN material numbers 1.4542, 1.4534 or 1.4614.

9. The joint (1) according to any of the preceding claims, **characterized in that** the glass joining agent (4) comprises more than 50% Bi₂O₃, 1% to 10% B₂O₃, 10% to 50% ZnO, 1% to 10% SiO₂, 0.1% to 1% Al₂O₃ or **in that** the joining agent (4) comprises more than 50% Bi₂O₃, 1% to 10% B₂O₃, 1% to 10% ZnO, 0.1% to 1% CeO₂ or **in that** the joining agent (4) comprises more than 50% Bi₂O₃, 1% to 10% B₂O₃, 1% to 10% ZnO, 0.1% to 1% CeO₂, 0.1% to 1% ZrO₂.

10. An electrical feedthrough (5) wherein said electrical feedthrough (5) comprises a housing (7) which is an alloy member (2); wherein the housing (7) has an opening (71) formed along a longitudinal axis (L) and having an opening wall (72); wherein an elongated electrical conductor (6) is radially enclosed by the opening wall (72) at least in certain areas along the longitudinal axis (L); wherein the conductor (6) is a further alloy member (2); wherein at least one ceramic member (3) is arranged at least partially within the opening (71), said ceramic member (3) radially enclosing the conductor (6) at least in certain areas along the longitudinal axis (L); wherein said ceramic member (3) is electrically insulating; wherein the conductor (6) is electrically insulated from the opening wall (72); wherein a glass joining agent (4) is arranged within the opening (71) adjacent to the ceramic member (3); wherein the glass joining agent (4) radially surrounds the conductor (6) at least in in certain areas along the longitudinal axis (L); **characterized in that** the conductor (6) and the ceramic member (3) are joined by means of a joint (1) according to any of the claims 1 to 9 by using glass joining agent (4); and **in that** the opening wall (72) and the ceramic member (3) are joined by means of a further joint (1) according to any of the claims 1 to 9 by using glass joining agent (4).

11. The electrical feedthrough (5) according to the preceding claim, **characterized in that** the electrical feedthrough (5) is suitable for conducting electrical charges from a first region (A) to a second region (B); and wherein the electrical feedthrough (5) tightly seals the first region (A) from the second region (B).

12. The electrical feedthrough (5) according to the preceding claim, **characterized in that** the tightness of the electrical feedthrough (5) is not impaired by permanent or temporary temperatures of up to 350°C.

13. The electrical feedthrough (5) according to any of the claims 10 to 12, **characterized in that** an insulation path (11) of the conductor (6) along the longitudinal axis (L) is radially enclosed by the ceramic member (3) and by the glass joining agent (4); and **in that** the ratio of the length of the insulation path (11) and the conductor diameter (61) is greater than three, or **in that** the length of the joining agent (4) along the longitudinal axis (L) is at least two times smaller than the diameter of the joining agent (4) in a direction perpendicular to the longitudinal axis (L).

14. A sensor (9) comprising at least one sensor member (8), a metallic sensor housing (92) and at least one electrical feedthrough (5) according to any of the claims 10 to 13; wherein the sensor housing (92) substantially encloses an interior (C); wherein the sensor housing (92) comprises at least one feedthrough opening (91); wherein in each feedthrough opening (91) is introduced one of the at least one electrical feedthroughs (5); wherein the electrical feedthrough (5) is joined to the sensor housing (92) by a material bonded joint (S), for example a soldered joint or a welded joint or an adhesive bonded joint; wherein the electrical feedthrough (5) connects the interior (C) to an exterior (D) by means of one of the at least one conductors (6) in an electric current conducting manner; wherein the at least one sensor member (8) is arranged in the interior (C); the at least one sensor member (8) being configured to detect a physical quantity; and wherein the at least one sensor member (8) is connected to the at least one conductor (6) 2 in an electric current conducting manner.

15. A method of producing an electrical feedthrough (5) through a body according to any of the claims 10 to 13, **characterized by the steps of:**
- Forming the elongated opening (71) in the housing (7) ;
- Arranging the ceramic member (3) at least partially in the opening (71) to extend parallel to the longitudinal axis (L) wherein the ceramic member (3) has a hollow-cylindrical shape;
- Arranging the glass joining agent (4) at least partially in the opening (71) to extend parallel to the longitudinal axis (L) and to abut against said ceramic member (3) wherein the glass joining agent (4) has a hollow-cylindrical shape;
- Arranging the conductor (6) in the hollow-cylindrical ceramic member (3) and in the glass joining agent (4) so that the ceramic member (3) and the glass joining agent (4) at least partially surround the conductor (6) radially along the longitudinal axis (L);
- At least partially liquefying the glass joining agent (4) by heating the conductor (6), ceramic member (3), housing (7) and glass joining agent (4) arranged as described above to a temperature above the melting temperature of the glass joining agent (4); penetration of at least bismuth-containing portions of the glass joining agent (4) into the ceramic member (3) and formation of the mixing region (10);
- Changing the temperature of the conductor (6), ceramic member (3), housing (7) and glass joining agent (4) arranged as described above to a temperature below the melting temperature of the glass joining agent (4) and forming a joint (1) that comprises a material bonded joint (24) between the glass joining agent (4) and the conductor (6) and a material bonded joint (34) between the glass joining agent (4) and the ceramic member (3); and forming a joint (1) that comprises a material bonded joint (24) between the glass joining agent (4) and the housing (6) and a material bonded joint (34) between the glass joining agent (4) and the ceramic member (3).

## Revendications

1. Connexion (1), ladite connexion (1) reliant un élément en alliage (2) à un élément en céramique (3), réalisée au moyen d'un agent de connexion en verre (4) qui est relié à l'élément en alliage (2) au moyen d'une liaison de matière (24), lequel agent de connexion en verre (4) étant relié à l'élément en céramique (3) au moyen d'une autre liaison de matière (34) ; **caractérisée en ce que** l'agent de connexion en verre (4) est constitué d'un verre dont le point de fusion est inférieur à 800°C ; **en ce que** ledit agent de connexion en verre (4) a un coefficient de dilatation thermique d'au moins 9·10⁻⁶ K⁻¹ ; **en ce que** ledit agent de connexion en verre (4) a une teneur en bismuth d'au moins 10 % ; **en ce que** ledit élément en alliage (2) a un coefficient de dilatation thermique d'au moins 9·10⁻⁶ K⁻¹ ; **en ce que** ledit élément en céramique (3) a un coefficient de dilatation thermique de 8·10⁻⁶ K⁻¹ au maximum; **en ce que** la liaison de matière (34) entre l'agent de connexion en verre (4) et l'élément en céramique (3) comprend une zone de mélange (10) ; **en ce que** ladite zone de mélange (10) est une zone partielle de l'élément en céramique (3) ; et **en ce que** ladite zone de mélange (10) a une teneur en bismuth plus élevée par rapport à la teneur en bismuth de l'élément en céramique (3) à l'extérieur de la zone de mélange (10).

2. Connexion (1) selon la revendication 1, **caractérisée en ce que** la zone de mélange (10) est agencée adjacente à l'agent de connexion en verre (4) ; et **en ce que** la teneur en bismuth dans la zone de mélange (10) augmente progressivement en direction de l'agent de connexion en verre (4).

3. Connexion (1) selon l'une quelconque des revendications précédentes, **caractérisée en ce que** la teneur en bismuth diminue de façon abrupte à partir de l'agent de connexion en verre (4) en direction de la zone de mélange (10).

4. Connexion (1) selon la revendication précédente, **caractérisée en ce que** la zone de mélange (10) a une extension spatiale d'au moins 0,001 mm à partir de l'agent de connexion en verre (4) ; et **en ce que** la zone de mélange est délimitée par l'extension de l'élément en céramique (3) et est en outre délimitée à l'intérieur de l'élément en céramique (3) par un plan dans lequel la teneur en bismuth dans l'élément en céramique (3) est égale à 1/e de la teneur en bismuth dans l'élément en céramique (3) dans la zone de mélange (10) directement adjacente à l'agent de connexion en verre (4).

5. Connexion (1) selon l'une quelconque des revendications précédentes, **caractérisée en ce que** l'agent de connexion en verre (4) est exempt de plomb ; et **en ce que** l'agent de connexion en verre (4) est constitué d'un verre dont la température de fusion est inférieure à 800°C, avantageusement inférieure à 650°C.

6. Connexion (1) selon l'une quelconque des revendications précédentes, **caractérisée en ce que** l'élément en céramique (3) est électriquement isolant ; **en ce que** l'élément en céramique (3) contient une proportion d'oxyde d'aluminium, d'oxyde de zirconium, d'oxyde de silicium ou d'un mélange de ces matériaux ; et **en ce que** cette proportion est d'au moins 70 %, de préférence d'au moins 95 %.

7. Connexion (1) selon l'une quelconque des revendications précédentes, **caractérisée en ce que** l'élément en alliage (2) a une structure polycristalline ; et **en ce que** la taille moyenne des grains de la structure polycristalline est en moyenne inférieure à 0,01 mm.

8. Connexion (1) selon l'une quelconque des revendications précédentes, **caractérisée en ce que** l'élément en alliage (2) est un acier martensitique, par exemple l'un des aciers ayant les numéros de matériau EN 1.4542, 1.4534 ou 1.4614.

9. Connexion (1) selon l'une quelconque des revendications précédentes, **caractérisée en ce que** l'agent de connexion en verre (4) comprend plus de 50% de Bi₂O₃, 1% à 10% de B₂O₃, 10% à 50% de ZnO, 1% à 10% de SiO₂, 0,1% à 1% Al₂O₃ ou **en ce que** l'agent d'connexion (4) comprend plus de 50% de Bi₂O₃, 1% à 10% de B₂O₃, 1% à 10% de ZnO, 0,1% à 1% de CeO₂ ou **en ce que** l'agent d'connexion (4) comprend plus de 50% de Bi₂O₃, 1% à 10% de B₂O₃, 1% à 10% de ZnO, 0,1% à 1% de CeO₂, 0,1% à 1% de ZrO₂.

10. Traversée électrique (5), ladite traversée électrique (5) comprenant un boîtier (7) qui est un élément en alliage (2) ; dans laquelle le boîtier (7) a une ouverture (71) formée le long d'un axe longitudinal (L) et ayant une paroi d'ouverture (72) ; dans laquelle un conducteur électrique (6) allongé est radialement entouré par la paroi d'ouverture (72) au moins localement le long de l'axe longitudinal (L) ; dans laquelle le conducteur (6) est un autre élément en alliage (2) ; dans laquelle au moins un élément en céramique (3) est disposé au moins partiellement à l'intérieur de l'ouverture (71), ledit élément en céramique (3) entourant radialement le conducteur (6) au moins localement le long de l'axe longitudinal (L) ; dans laquelle ledit élément en céramique (3) est électriquement isolant ; dans laquelle le conducteur (6) est électriquement isolé de la paroi d'ouverture (72) ; dans laquelle un agent de connexion en verre (4) est disposé dans l'ouverture (71) adjacente à l'élément en céramique (3) ; dans laquelle l'agent de connexion en verre (4) entoure radialement le conducteur (6) au moins localement le long de l'axe longitudinal (L) ; **caractérisée en ce que** le conducteur (6) et l'élément en céramique (3) sont reliés au moyen d'une connexion (1) selon l'une quelconque des revendications 1 à 9 en utilisant l'agent de connexion en verre (4) ; et **en ce que** la paroi d'ouverture (72) et l'élément en céramique (3) sont reliés au moyen d'une autre connexion (1) selon l'une quelconque des revendications 1 à 9 en utilisant l'agent de connexion en verre (4).

11. Traversée électrique (5) selon la revendication précédente, **caractérisée en ce que** la traversée électrique (5) est apte à transmettre des charges électriques d'une première zone (A) à une seconde zone (B) ; et **en ce que** la traversée électrique (5) sépare de façon hermétiquement étanche la première zone (A) de la seconde zone (B).

12. Traversée électrique (5) selon la revendication précédente, **caractérisée en ce que** l'étanchéité de la traversée électrique (5) n'est pas altérée par des températures permanentes ou temporaires allant jusqu'à 350°C.

13. Traversée électrique (5) selon l'une quelconque des revendications 10 à 12, **caractérisée en ce qu'**une partie d'isolation (11) du conducteur (6) le long de l'axe longitudinal (L) est entouré radialement par l'élément en céramique (3) et par l'agent de connexion en verre (4) ; et **en ce que** le rapport entre la longueur de la partie d'isolation (11) et le diamètre du conducteur (61) est supérieur à trois, ou **en ce que** la longueur de l'agent de connexion (4) le long de l'axe longitudinal (L) est au moins deux fois plus petite que le diamètre de l'agent de connexion (4) dans une direction perpendiculaire à l'axe longitudinal (L).

14. Capteur (9) comprenant au moins un élément de capteur (8), un boîtier de capteur (92) métallique et au moins une traversée électrique (5) selon l'une quelconque des revendications 10 à 13 ; dans lequel le boîtier de capteur (92) renferme sensiblement une zone intérieure (C) ; dans lequel le boîtier de capteur (92) comprend au moins une ouverture de traversée (91) ; dans lequel dans chaque ouverture de traversée (91) est introduite l'une des au moins une traversée électrique (5) ; dans lequel la traversée électrique (5) est reliée au boîtier de capteur (92) par une liaison de matière (S), par exemple un joint brasé ou un joint soudé ou un joint adhésif ; dans lequel la traversée électrique (5) relie la zone intérieure (C) à une zone extérieure (D) au moyen de l'un des au moins un conducteur (6) de façon électriquement conductrice ; dans lequel l'au moins un élément de capteur (8) est disposé dans la zone intérieure (C) ; l'au moins un élément de capteur (8) étant configuré pour détecter une valeur physique ; et dans lequel l'au moins un élément de capteur (8) est connecté de façon électriquement conductrice à l'au moins un conducteur (6) 2.

15. Procédé de fabrication d'une traversée électrique (5) à travers un corps selon l'une quelconque des revendications 10 à 13, **caractérisé par les étapes consistant à :**
- Fabriquer l'ouverture (71) allongée dans le boîtier (7) ;
- Disposer l'élément en céramique (3) au moins partiellement dans l'ouverture (71) et parallèlement à l'axe longitudinal (L), l'élément en céramique (3) étant en forme de cylindre creux ;
- Disposer l'agent de connexion en verre (4) au moins partiellement dans l'ouverture (71), parallèlement à l'axe longitudinal (L) et adjacent à ledit élément en céramique (3), l'agent de connexion en verre (4) étant en forme de cylindre creux ;
- Disposer le conducteur (6) au sein de l'élément en céramique (3) en forme de cylindre creux et au sein de l'agent de connexion en verre (4) de sorte que l'élément en céramique (3) et l'agent de connexion en verre (4) entourent au moins partiellement le conducteur (6) radialement le long de l'axe longitudinal (L) ;
- Liquéfier au moins partiellement l'agent de connexion en verre (4) en chauffant le conducteur (6), l'élément en céramique (3), le boîtier (7) et l'agent de connexion en verre (4) disposés comme décrit ci-dessus à une température supérieure à la température de fusion de l'agent de connexion en verre (4) ; pénétration d'au moins des parties contenant du bismuth de l'agent de connexion en verre (4) dans l'élément en céramique (3) et formation de la zone de mélange (10) ;
- Changer la température du conducteur (6), de l'élément en céramique (3), du boîtier (7) et de l'agent de connexion en verre (4) disposés comme décrit ci-dessus à une température inférieure à la température de fusion de l'agent de connexion en verre (4) et formation d'une connexion (1) comprenant une liaison de matière (24) entre l'agent de connexion en verre (4) et le conducteur (6) et une liaison de matière (34) entre l'agent de connexion en verre (4) et l'élément en céramique (3) ; ainsi que formation d'une connexion (1) comprenant une liaison de matière (24) entre l'agent de connexion en verre (4) et le boîtier (6) et une liaison de matière (34) entre l'agent de connexion en verre (4) et l'élément en céramique (3).
